# EUROPEAN PATENT APPLICATION

(11) **EP 2 821 345 A1**
(43) Date of publication of application: **07.01.2015**
(21) Application number: 13174873.3
(22) Date of filing: 03.07.2013
(51) Int. Cl.: B64D 11/00, B64D 11/06

(54) **Aircraft seating unit with fixture member**

(71) Applicant: Zodiac Aerotechnics, 78370 Plaisir (FR)
(72) Inventor: Rittner, Wolfgang, 23623 Ahrensbök (DE); Boomgaarden, Günter, 23684 Scharbeutz (DE)
(74) Representative: Eisenführ Speiser

(57) **Abstract**

The invention relates to an aircraft passenger service arrangement (13), comprising one or more passenger service units (18) for arrangement above a passenger seat (16a, 16b, 16c), and a fixture member (20). The passenger service arrangement (13) is characterized in that the fixture member (20) is adapted for directly fixing the passenger service unit (18) to a passenger seat (16a, 16b, 16c) in a defined relationship to each other. Further the invention relates to a seating device (14) comprising an aircraft passenger service arrangement (13).

## Description

The invention relates to an aircraft passenger service arrangement, comprising one or more passenger service units (PSU) for arrangement above a passenger seat. The invention further relates to aircraft seating unit, comprising one aforementioned aircraft passenger service arrangement and one or more passenger seats in a side-by-side row arrangement adapted to be replaceable inside an aircraft cabin.

Passenger aircrafts in general have a cabin in which the passengers are seated. The passenger seats usually are arranged in rows wherein each row is divided by one ore more corridors. For example a typical arrangement is three seats in a side-by-side arrangement on the left corridor side, four seats in a side-by-side arrangement in the middle of the cabin between the two corridors and again three seats in a side-by-side arrangement on the right side. Further for every seat or at least for every group of seats at the cabin roof one or more passenger service units are arranged in an aircraft. Such passenger service units could comprise emergency oxygen devices comprising oxygen masks and the like or a reading light, air gaspers, displays or a cabin attend and switch. In particular the emergency oxygen device including the oxygen masks must have a determined location in relationship to one particular seat so that in an emergency event every passenger can reach her or his respective oxygen mask.

When an aircraft is used on a different route or for a different airline a cabin reconfiguration may become necessary. That means that the seats or row of seats have to be moved to the front or to the back such that additional seat rows may be arranged inside the cabin or one or more seat rows are taken out of the aircraft. In the same manner the passenger service units need to be moved so that they correspond to the respective seat or group of seats.

During the time of reconfiguration the aircraft has to stay on ground and cannot be used for aviation services. Such aircraft on ground times are expensive and thus it is desired to keep them as short as possible.

Accordingly, it is a major object of the invention to provide an Aircraft passenger service arrangement, and an aircraft seating unit, which provide a developed basis for developed reconfiguration aspects, but also security aspects in an emergency case. In particular the inventions aims to a more simple, efficient and safe reconfiguration of the aircraft cabin.

As relates the aircraft passenger service arrangement, the object is achieved by the invention by means of an aircraft passenger service arrangement to an aircraft passenger service arrangement as claimed in claim 1. As relates the aircraft seating unit, the object is achieved by the invention by means of an aircraft seating unit as claimed in claim 14.

In the first aspect of the invention a proposed aircraft passenger service arrangement comprises one or more passenger service units for arrangement above a passenger seat, and a fixture member, wherein the fixture member is adapted for directly fixing the passenger service unit to a passenger seat in a defined relationship to each other. By means of the fixture member the passenger service unit or units (PSU) and the respective seat or row of seats are directly fixable together and thus can be replaced as a single module or item when reconfiguring the aircraft cabin. The invention recognized that by use of the fixture member the geometrical relationship between the passenger seat and the passenger service unit is locked and may be kept during reconfiguration of the aircraft cabin. Thus, it not necessary to adjust every passenger service unit after moving one or more seats inside the cabin. Preferably the passenger service unit and the fixture member form a single module which is not or not necessarily connected to the wall or roof of the cabin. By use of the fixture member according to the present invention, a more simple, efficient and safer reconfiguration of the aircraft cabin is achieved. Further defect PSUs may easily be changed during an aircraft stop.

These and further developed configurations of the invention are further outlined in the dependent claims. Thereby, the mentioned advantages of the proposed concept are even more improved. For each feature of the dependent claims it is claimed independent protection independent from all other features of this disclosure.

In a particular preferred embodiment, the passenger service unit (PSU) comprises an emergency oxygen device. Especially for emergency oxygen devices the geometrical relationship to the passenger seat is particular important for safety reason. By means of the fixture member it is ensured that the geometrical relationship between the passenger seat and the emergency oxygen device is such that a person sitting on the seat can reach an oxygen mask or the like stored in the emergency oxygen device. Such emergency oxygen devices are used to supply oxygen to passenger of an aircraft in an emergency situation like a decompression situation or smoke or the like on board of an aircraft. Usually, the oxygen masks are stored above the passenger in a ceiling compartment, e.g. a separate casing, and in case of an emergency are released to fall out of the casing. According to this invention oxygen masks are stored in the passenger service unit, preferably in a separate casing, fixed to the fixture member. The oxygen masks then are provided to the passenger at a certain level defined by means to connect the oxygen masks in the dropped state relative to the passenger service unit. Typically a chemical oxygen generator comprises one or more substances which are able to conduct a chemical reaction producing oxygen or an oxygen pressure cylinder including an oxygen source are used to provide oxygen to the passenger. Preferably the oxygen source as well as a suitable activator are also comprised in the emergency oxygen device and thus in the passenger service unit.

In a second preferred embodiment the passenger service unit (PSU) comprises any one or more of the following components: a reading light, a cabin attendant call switch and signal, a ventilation nozzle, a passenger entertainment device like a display and/or a loudspeaker. Passenger service units are widely used in civil aircrafts. Usually, the passenger service unit is located above the seat of the passenger and/or crew members. For entertaining and/or providing the passenger with information the passenger service unit contains for example reading lights, loudspeakers, illuminated signs and gaspers providing conditioned air. Usually a PSU consist generally of one plastic panel whereon all functional components are mounted to. For meeting the civil aircraft standards in comfort it is desired to arrange the PSU at a determined location, so it may be reachable with the hand of a passenger for e.g. switching the light on/off or adjusting the direction of an air stream from the gasper. Thus it is preferred that the geometrical relationship between the passenger seat and the passenger service unit is lockable by means of the fixture member and may be kept during reconfiguration of the aircraft cabin.

Further in specific embodiments it is preferred that the fixture member comprises any one or more of the following components: a reading light, a cabin attendant call switch and signal, a ventilation nozzle, a passenger entertainment device like a display and/or a loudspeaker. Thus, some of the components preferably are comprised in the PSU and some may be arranged at the fixture member. For example a cabin attendant call switch is preferably arranged at the fixture member and a cabin attendant call signal preferably is comprised at the PSU und thus close to the cabin ceiling. In case the switch is arranged at the fixture member it may be arranged on the side of a seat and thus may easily be reachable by a passenger. The signal close to the ceiling is easily recognizable by the cabin crew. Thus, safety and comfort are improved.

Preferably the fixture member is substantially stiff. Preferably the fixture member is adapted to carry the load of the passenger service unit. Thereby is becomes possible to hold the passenger service unit in an umbrella like or floor lamp like manner relative to a respective seat to achieve the imagination of a "flying" passenger service unit. Further, forming the fixture member substantially stiff avoids unwanted adjusting or replacement of the PSU in relation to the respective seat even during turbulences and the like.

According to a further preferred embodiment the fixture member has a first end and a second end wherein the first end is adapted to be connected to a respective passenger seat and the second end is connected to the passenger service unit. This is a simple and effective way of coupling the seat to the passenger service unit. For example the first end of the fixture member may be connected to the backrest of the passenger seat and the second end to the passenger service unit. If for example three seats in a side-by-side arrangement are used, the fixture member may be connected to the middle one of the three seats. Alternatively it is possible to connect the first end of the fixture member to the side of the outer seat which is distal to the corridor of the aircraft cabin.

Advantageously the first end comprises first connecting means, in particular screw means, to be mountable against a respective passenger seat. Also other mechanical connecting means, like clips and clamping connections are preferred.

In a particular preferred embodiment the fixture member is formed as a rod, a tube construction or a cabin wall element. Even though further possibilities of forming the fixture member are conceivable these three are particularly preferred. Forming the fixture member as a rod or a tube construction results in a less space consuming arrangement and the diameter of the fixture member may be kept small as possible. Forming the fixture member as a rod or a tube construction further opens the opportunity to use the interior of the tube for wiring or other supply line required by the passenger service unit. The rod further may serve as a holding rack for additional equipment as cup holders and the like. It is not necessary to guide the rod or tube construction through the interior of the cabin e.g. on the interior side of the cabin wall. Much more, both, the rod and/or the tube construction may be guided behind the cabin wall, thus between the cabin wall und the aircraft fuselage. According to this embodiment, the fixture member itself is not or not completely visible and the cabin interior is free of rods and tubes.

Particularly preferred is to form the fixture member as a part of the cabin wall. This results in an "invisible" fixture member. In other words, a cabin wall panel is used to carry the passenger service unit and is adapted to be fixedly connected with the respective seat or group of seats. For example the fixture member in form of a wall panel preferably extends over the whole wall und down below the floor and is adapted to be connected to the seats below the floor. On the roof side, the fixture member could either form a part of the roof or extends behind the roof to carry the passenger service unit from the top. For this second embodiment an additional slot in the roof may be provided for a connecting element between the passenger service unit and the fixture member. This embodiment serves for a particularly simple cabin reconfiguration.

According to another preferred embodiment the fixture member, comprises a substantially vertical section terminating at the first end, and a substantially horizontal section terminating at the second end, wherein the substantially horizontal section extends in direction of a respective seat a respective seat row, when mounted inside an aircraft cabin. Preferably the vertical section has a length between 70cm and 2m and/or the horizontal section has a length between 30cm and 1,5m. In particular the vertical section has a length between one of the following: 70cm and 1,5m; 60cm and 1,5m; 60cm and 1,2m; 60cm and 1m; 60cm and 90m; 90cm and 1,2m; 90cm and 1m. In particular the horizontal section has a length between one of the following: 30cm and 1,2m; 30cm and 1 m; 30cm and 90cm; 30cm and 70cm; 30cm and 50cm.

Preferably the fixture member is adjustable. Preferably the fixture member is adjustable to adjust the geometrical relationship between the passenger seat and the overhead service device. For example the fixture member comprises a telescope element, a hinge or similar mechanical elements in order to be adjustable. By a telescope element the distance between the passenger service unit and the passenger seat is adjustable. A hinge serves as an angle adjusting means. Also two or more telescope elements and/or hinges may be provided.

In a further preferred embodiment the defined relationship between the passenger service unit and the respective passenger seat is chosen according to a common standard, in particular according to the SAE AIR1390A standard. According to this embodiment in particular the safety of the seating unit and thus the aircraft itself is enhanced.

Advantageously according to a further embodiment the fixture member has such a configuration that, when mounted inside an aircraft cabin, the passenger service unit is arranged in a side-by-side arrangement with an aircraft cabin roof, in particular arranged adjacent to an over head supply channel (OHSC) of an aircraft. According to this specific embodiment, the supply lines and wiring are not necessarily guided through the fixture member itself but are arranged inside an over head supply channel (OHSC). This over head supply channel (OHSC) centrally supplies all passenger service units comprising the emergency oxygen devices or the like with e.g. electrical power, signals for entertainment or safety devices such as actuation signal for the emergency oxygen device, air from a central air conditioning and the like. Preferably the over head supply channel (OHSC) comprises specific ports and the passenger service units comprise respective corresponding ports so that each passenger service unit may easily be connected to the over head supply channel (OHSC).

According to the second aspect of the invention an aircraft seating unit, comprises one aircraft passenger service arrangement according to an above described preferred embodiment of an aircraft passenger service arrangement, and one or more passenger seats in a side-by-side row arrangement adapted to be replaceable inside an aircraft cabin, wherein the fixture member directly fixes the passenger service unit and the passenger seat in a defined relationship to each other. Further it is preferred that the passenger seat comprises upper tracks for acting together with lower tacks of an aircraft cabin floor. An upper track lower track system inside an aircraft cabin is a common and simple system for efficient reconfiguration of an aircraft cabin. Typically a group of two three or four seats share one pair of upper tracks. Alternatively each seat comprises its own pair of tracks. The group of seats may then be moved forward and backward inside the cabin during reconfiguration using the track system. The seats do not need to be lifted and carried for this purpose. Thus, keeping the geometrical relationship between the passenger service unit and the passenger seat is even more simplified according to this embodiment.

According to a further aspect of the invention a fixture member for use in an aircraft seating unit according to one of the aforementioned preferred embodiments of an aircraft seating unit, and/or for use in an aircraft passenger service arrangement according to one of the aforementioned preferred embodiments of an aircraft passenger service arrangement is characterized in that the fixture member is adapted for fixing an passenger service unit and a passenger seat in a defined relationship to each other. The fixture member preferably is substantially stiff and formed as a rod, a tube construction or a cabin wall element.

The fixture member and the beforehand described aircraft passenger service arrangement share multiple features, preferred embodiments, aspect and advantages. Therefore for further advantages and features of the fixture member according to the further aspect of the invention it is referred to its full extend to the beforehand described preferred embodiments of the aircraft passenger service arrangement.

According to an even further aspect of the invention an aircraft comprises an aircraft cabin having a cabin roof with an over head supply channel (OHSC), and a cabin floor, is characterized by an aircraft seating unit comprising one or more passenger seats in a side-by-side row arrangement adapted to be replaceable inside an aircraft cabin, one or more passenger service units, in particular comprising an emergency oxygen device arranged above the seat, and a fixture member adapted for fixing the passenger service unit and the passenger seat in a defined relationship to each other. Such an aircraft, in particular civil aircraft, provides for a more simple, efficient and safe reconfiguration of the aircraft cabin. According to a preferred embodiment of the aircraft the passenger service unit is arranged adjacent to the over head supply channel (OHSC), so that the overhead service device may be in functional connection with the over head supply channel (OHSC). According to a further preferred embodiment of the aircraft, the cabin floor further comprises lower tracks and the passenger seat comprises upper tracks for engaging the lower tracks, wherein the fixture member has a first end and a second end, the first end being connected to the passenger seat and the second end being connected to the passenger service units.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does exclude a plurality. The wording "a number of" items, comprises also the number one, i. e. a single item, and further numbers like two, three, four and so forth.

The drawing shows in:

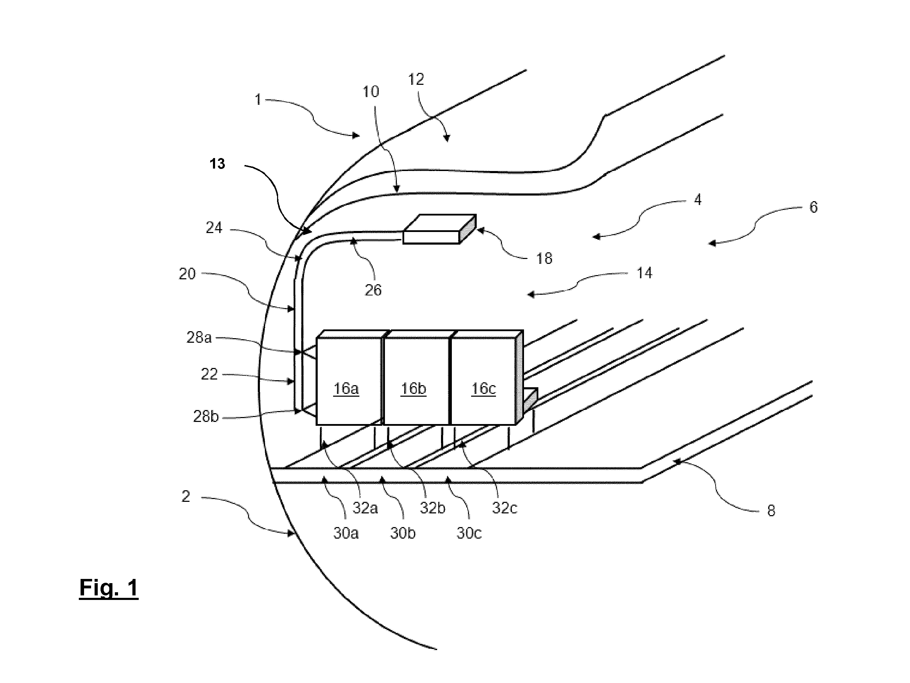

- Fig. 1: a simplified scheme of a preferred embodiment of an aircraft passenger service arrangement with a fixture member mounted inside an aircraft cabin which is shown in a perspective cross-sectional view.

The figure shows an aircraft 1 in a perspective half cross-sectional view. The aircraft 1 comprises an aircraft fuselage 2 with an interior wall 4 which forms a part of the wall of the aircraft cabin 6. Further the aircraft 1 comprises a cabin floor 8 and a cabin roof 10. Between the roof 10 and the outer fuselage 2 an over head supply channel (OHSC) 12 is provided for supplying the passengers with fresh air.

Inside the aircraft cabin 6 an aircraft passenger service arrangement 13 is provided. The aircraft passenger service arrangement 13 according to this exemplary embodiment is mounted to three passenger seats 16a, 16b, 16c in a side-by-side row arrangement adapted to be replaceable inside the aircraft cabin 6. Together the aircraft passenger service arrangement 13 and the passenger seats 16a, 16b, 16c form a passenger seating unit 14, which defines a module and is replaceable inside the cabin 6. More seats are arranged in the same row in the cabin 6, which are for the sake of simplicity not shown in the figure. It should be understood that also two, four, five or even more seats could be provided without departing from the scope of the invention. Above the seats 16a, 16b, 16c one passenger service unit 18 is arranged. It is also possible to arrange one passenger service unit for each seat 16a, 16b, 16c, however according to this embodiment one passenger service unit 18 is used for all three seats 16a, 16b, 16c together.

According to this embodiment the passenger service unit 18 comprises a emergency oxygen device and further a reading light, loudspeakers, illuminated signs and gaspers providing conditioned air.

Such emergency oxygen devices are used to supply oxygen to passenger of an aircraft 1 in an emergency situation like a decompression situation or smoke or the like on board of an aircraft. The oxygen masks are stored in a separate casing, and in case of an emergency are released to fall out of the casing and thus from the passenger service unit 18. Here a chemical oxygen generator is used which comprises one or more substances which are able to conduct a chemical reaction producing oxygen. For entertaining and/or providing the passenger with information the passenger service unit (PSU) contains according to this specific embodiment a reading light for each of the seats 16a, 16b, 16c, loudspeakers, illuminated signs and gaspers providing conditioned air. The gasper is in a not shown manner connected to the over head supply channel (OHSC) 12.

Further according to this embodiment a fixture member 20 adapted for fixing the passenger service unit 18 and the passenger seats 16a, 16b, 16c in a defined relationship to each other is provided. The fixture member 20 is arranged in a way that the seating unit 14 may be replaced as a single module. By use of the fixture member 20 the geometrical relationship between the passenger seats 16a, 16b, 16c and the passenger service unit 18 comprising the emergency oxygen device is locked and may be kept during reconfiguration of the aircraft cabin 6. By use of the fixture member 20 according to the present invention, a more simple, efficient and safer reconfiguration of the aircraft cabin 6 is achieved. Especially for the emergency oxygen devices the geometrical relationship to the passenger seats 16a, 16b, 16c is particular important for safety reason. By means of the fixture member 20 it is ensured that the geometrical relationship between the passenger seats 16a, 16b, 16c and the emergency oxygen device is such that a person sitting on the seat 16a, 16b, 16c can reach an oxygen mask or the like stored in the emergency oxygen device.

The fixture member 20 is formed as a tube construction. It comprises a first substantially vertical section 22, a second curved section 24 and a third substantially horizontal section 26 which extends indirection of the seat row over the middle seat 16b. Forming the fixture member 20 as a rod or a tube construction results in a less space consuming arrangement and the diameter of the fixture member 20 may be kept small as possible. Forming the fixture member 20 as a tube construction provides the particular advantage that the interior of the tube is usable for wiring or other supply lines required by the passenger service unit 18. The fixture member 20 further may serve as a holding rack for additional equipment as e.g. a cabin attend switch, cup holders and the like. It is not necessary to guide the fixture member 20 through the interior of the cabin 6 as shown in fig. 1. Much more, the fixture member 20 may be guided behind the cabin wall 4, thus between the cabin wall 4 und the aircraft fuselage 2. By forming the fixture member 20 as a tube construction it is substantially stiff. The fixture member 20 is adapted to carry the load of the passenger service unit 18. Thereby is becomes possible to hold the passenger service unit 18 in an umbrella like or floor lamp like manner to achieve the imagination of a "flying" passenger service unit 18. Further, forming the fixture member 20 substantially stiff avoids unwanted adjusting or swinging of the overhead service device in relation to the seats 16a, 16b, 16c even during turbulences and the like.

The fixture member 20 has a first end formed by the section 22 and a second end formed by the section 26. The section 22 is connected to the passenger seat 16a by means of two holding devices 28a, 28b. It is fixed on the left hand side of the back rest frame of seat 16a, which is closest to the wall 4. The section 26 and thus the second end is connected to the passenger service unit 18. Alternatively the fixture member 20 may be connected to the middle seat 16b of the three seats 16a, 16b, 16c. Further alternatively two or more fixture members 20 could be provided to achieve an even stiffer construction. In a further not shown alternative the fixture member is formed as a part of the cabin wall 4. This would result in an "invisible" fixture member. In other words, a cabin wall panel is used to carry the passenger service unit 18 and is fixedly connected with the respective seat or group of seats 16a, 16b, 16c. For example the fixture member in form of a wall panel preferably extends over the whole wall und down below the floor and is connected to the seats below the floor 8. On the roof 10 side, the fixture member could either form a part of the roof 10 or extends behind the roof 10 to carry the passenger service unit 18 from the top.

As can be seen in fig. 1 the passenger service unit 18 is held adjacent to the cabin roof 10 and thus to the over head supply channel (OHSC) 12. In different also preferred embodiments the passenger service unit 18 may even be arranged closer to the roof 10, is even may touch the roof 10. Preferably a channel or guidance (not shown) may be provided in the roof 10 for connecting the passenger service unit 18 with the OHSC 12.

The holding devices 28a, 28b further serve as adjustment means so that the fixture member 20 is adjustable. The comprise preferably screwing or clamping means. Preferably the fixture member 20 is adjustable to adjust the geometrical relationship between the passenger seats 16a, 16b, 16c and the passenger service unit 18. Further the fixture member 20 could comprise a telescope element e.g. in section 26, or a hinge in section 24 for altering an angle of the section 26.

According to this embodiment the placement of the passenger service unit 18 is chosen in accordance with the SAE AIR1390A standard.

As is becomes clear from fig. 1 on the floor 8 of the aircraft cabin 6 three pairs of lower tracks 30a, 30b, 30c are provided. These lower tracks 30a, 30b, 30c run substantially through the whole cabin 6 from the back to the front. The passenger seats 16a, 16b, 16c are arranged on corresponding upper tracks 32a, 32b, 32c. An upper track lower track system inside an aircraft cabin 6 is a common and simple system for efficient reconfiguration of an aircraft cabin 6. By use of the tracks 30a, 30b, 30c, 32a, 32b, 32c the seating unit 14, including the seats 16a, 16b, 16c, the overhead service device 18 and the fixture member 20, may then be moved forward and backward inside the cabin 6 during reconfiguration. The seating unit 14 do not need to be lifted and carried for this purpose. Thus, keeping the geometrical relationship between the passenger service unit 18 and the passenger seat 16a, 16b, 16c is even more simplified. The seating unit 14 can be progressively moved back and forth during reconfiguration without loosing the desired geometrical relationship between the passenger service unit 18 and the seats 16a, 16b, 16c.

## Claims

1. Aircraft passenger service arrangement (13), comprising
one or more passenger service units (18) for arrangement above a passenger seat (16a, 16b, 16c), and
a fixture member (20),
wherein the fixture member (20) is adapted for directly fixing the passenger service unit (18) to a passenger seat (16a, 16b, 16c) in a defined relationship to each other.

2. Arrangement as claimed in claim 1, wherein the passenger service unit (18) comprises an emergency oxygen device.

3. Arrangement as claimed in claim 1 or 2,
wherein the passenger service unit (18) comprises any one or more of the following components: a reading light, a cabin attendant call switch and signal, a ventilation nozzle, a passenger entertainment device like a display and/or a loudspeaker.

4. Arrangement as claimed in claim 1 or 2,
wherein the fixture member (20) comprises any one or more of the following components: a reading light, a cabin attendant call switch and signal, a ventilation nozzle, a passenger entertainment device like a display and/or a loudspeaker.

5. Arrangement as claimed in one of the preceding claims wherein the fixture member (20) is substantially stiff.

6. Arrangement as claimed in one of the preceding claims wherein the fixture member (20) has a first end and a second end, the first end is adapted to be connected to a respective passenger seat (16a, 16b, 16c) and the second end being connected to the passenger service unit (18).

7. Arrangement as claimed in claim 6, wherein the first end comprises first connecting means, in particular screw means, to be mountable against a respective passenger seat (16a, 16b, 16c).

8. Arrangement as claimed in one of the preceding claims wherein the fixture member (20) is formed as one of the following:
- rod;
- tube construction; or
- cabin wall element.

9. Arrangement as claimed in claim 7, wherein the fixture member, comprises a substantially vertical section (22) terminating at the first end, and a substantially horizontal section (26) terminating at the second end, wherein the substantially horizontal section (26) extends in direction of a respective seat (16b) of a respective seat row, when mounted inside an aircraft cabin.

10. Arrangement as claimed in claim 9, wherein the vertical section (22) has a length between 70cm and 2m and/or the horizontal section (26) has a length between 30cm and 1,5m.

11. Arrangement as claimed in one of the preceding claims wherein the fixture member (20) is adjustable, in particular by means of one or more telescope elements and/or one or more hinges comprised in the fixture member (20).

12. Arrangement as claimed in one of the preceding claims wherein the defined relationship between the passenger service unit (18) and the respective passenger seat (16a, 16b, 16c) is chosen according to a common standard, in particular according to the SAE AIR1390A standard.

13. Arrangement as claimed in one of the preceding claims wherein the fixture member (20) has such a configuration that, when mounted inside an aircraft cabin (6), the passenger service unit (18) is arranged in a side-by-side arrangement with an aircraft cabin roof (10), in particular arranged adjacent to an over head supply channel (OHSC) (12) of an aircraft (1).

14. Aircraft seating unit, comprising
one aircraft passenger service arrangement as claimed in claim 1, and
one or more passenger seats (16a, 16b, 16c) in a side-by-side row arrangement adapted to be replaceable inside an aircraft cabin (6),
wherein the fixture member (20) directly fixes the passenger service unit (18) and the passenger seat (16a, 16b, 16c) in a defined relationship to each other.

15. Seating unit as claimed in one of the preceding claims wherein the passenger seat (16a, 16b, 16c) comprises upper tracks (32a, 32b, 32c) for acting together with lower tacks (30a, 30b, 30c) of an aircraft cabin floor (8).
